## Europäisches Patentamt

## European Patent Office

## Office européen des brevets

(19)

(11) Veröffentlichungsnummer: **0 131 240**
**B1**

(12) **EUROPÄISCHE PATENTSCHRIFT**

(45) Veröffentlichungstag der Patentschrift:
**31.08.88**

(21) Anmeldenummer: **84107703.5**

(22) Anmeldetag: **03.07.84**

(51) Int. Cl.⁴: **C 01 B 25/235**

(54) **Verfahren und Vorrichtung zur Entfernung von Fluor und organischen Verbindungen aus vorgereinigter Nassverfahrensphosphorsäure.**

(30) Priorität: **12.07.83 DE 3325121**

(43) Veröffentlichungstag der Anmeldung:
**16.01.85 Patentblatt 85/3**

(45) Bekanntmachung des Hinweises auf die Patenterteilung:
**31.08.88 Patentblatt 88/35**

(84) Benannte Vertragsstaaten:
**BE DE FR GB IT NL SE**

(56) Entgegenhaltungen:
**EP-A-0 016 996**
**EP-A-0 071 797**
**DE-B-2 822 303**

(73) Patentinhaber: **HOECHST AKTIENGESELLSCHAFT,**
**Postfach 80 03 20, D-6230 Frankfurt am Main 80**
**(DE)**

(72) Erfinder: **Schimmel, Günther, Dr., Ehrenstrasse 16,**
**D-5042 Erftstadt (DE)**
Erfinder: **Gradl, Reinhard, Dr., Heimbacher Weg**
**27, D-5042 Erftstadt (DE)**
Erfinder: **Heymer, Gero, Dr., Fasanenaue 12, D-5042**
**Erftstadt (DE)**

EP 0 131 240 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Vorliegende Erfindung betrifft ein Verfahren zur Entfernung von aus Fluor und organischen Verbindungen bestehenden Verunreinigungen aus Naßverfahrensphosphorsäure, welche mit Hilfe von Extraktionsverfahren in an sich bekannter Weise bereits vorgereinigt worden ist.

Es ist bekannt, durch übliche Extraktionsverfahren vorgereinigte Naßverfahrensphosphorsäuren in Verdampfern, Füllkörper- Bodenkolonnen usw. bei erhöhten Temperaturen und Drucken mit Wasserdampf zu behandeln, um Phosphorsäuren zu erhalten, die Lebensmittelqualität hinsichtlich des Fluorgehaltes aufweisen (DE-B-2 822 303).

Es ist ferner bekannt, Verunreinigungen organischer Art aus Naßverfahrensphosphorsäure - insbesondere aus solcher, welche durch Extraktionsverfahren gewonnen wurde - durch Behandeln dieser Säure mit Wasserstoffperoxid zu entfernen (EP-A-0 016 996, DE-A-3 131 847 und die entsprechende EP-A-0 071 797), wobei diese Behandlung in Gegenwart oder Abwesenheit von Katalysatoren und bei erhöhten Temperaturen durchgeführt werden kann.

Die Entfernung von Fluor und organischen Verunreinigungen aus Phosphorsäure in zwei voneinander getrennten Verfahrensstufen hat mehrere verfahrenstechnische und kostenmäßige Nachteile, wie z. B. zweimalige Aufheizung der Säure (höhere Energiekosten) und zusätzlicher Apparatebedarf (Mehrbedarf an Förderorganen, meßtechnischen Einrichtungen, Druckbehältern etc.).

Ferner ist bei zwei getrennten Apparaten lediglich der zweite Reaktor hinsichtlich der $C_{org.}$ -Entfernung wirksam, d. h. der bei der Zersetzung des $H_2O_2$ entstehende Sauerstoff wird nur unvollständig ausgenutzt.

Aufgabe der vorliegenden Erfindung war es daher, eine neue Arbeitsweise und eine Vorrichtung bereitzustellen, die es gestatten, in einfacher Weise mit minimalem Energie- und Chemikalienaufwand aus extraktionsgereinigter Phosphorsäure ein Produkt von sog. Lebensmittelqualität zu erhalten.

Als Phosphorsäuren mit Lebensmittelqualität werden Produkte angesehen, die weniger als 10 ppm F sowie weniger als 10 ppm flüchtige Säuren, berechnet als Essigsäure, enthalten (entspricht Zusatzstoffverkehrsverordnung vom 20.12.1977).

Überraschenderweise wurde nun gefunden, daß sich diese Aufgabe lösen läßt, wenn man das Fluor und die organischen Verbindungen gleichzeitig in einer einzigen Verfahrensstufe aus der Phosphorsäure entfernt, indem man letztere in den oberen Teil eines geschlossenen Behälters einleitet, dort im Gegenstrom mit Dampf bei Temperaturen von 120 bis 180°C mit Drucken größer als 1 bar, vorzugsweise von 1,5 bis 2,5 bar, behandelt, die so behandelte Säure im unteren Teil des Behälters auffängt, wo sie mit Wasserstoffperoxid umgesetzt wird und man über Kopf des Behälters die entstandenen fluorhaltigen Brüden und aus dem unteren Behälterteil die gereinigte Phosphorsäure abzieht.

Diese besondere Anordnung besitzt neben vielen verfahrenstechnischen und energietechnischen Vorzügen den besonderen Vorteil, daß der bei der Zersetzung des $H_2O_2$ frei werdende Sauerstoff im oberen Teil der Apparatur bereits eine mehrstufige Voroxidation der organischen Säurebestandteile bewirkt (vergl. Beispiel 1 und 6).

Vorzugsweise wird dabei die verunreinigte Phosphorsäure vorerhitzt in den Behälter geleitet und das Wasserstoffperoxid als wäßrige Lösung eingesetzt, die man im unteren Behälterteil im Gleichstrom mit der Phosphorsäure führt. Ein weiterer Gegenstand der vorliegenden Erfindung ist eine Vorrichtung zur Durchführung des neuen Verfahrens. Die Vorrichtung ist in der nachfolgenden Zeichnung schematisch dargestellt und besteht aus einem mit Druckhaltevorrichtungen versehenen geschlossenen Behälter 8, der in seinem oberen Teil mit einer Zuführung 1 für verunreinigte Phosphorsäure und einer, zu dieser Zuführung 1 räumlich tiefer angeordneten Dampfzuleitung 2, die sowohl über- als auch unterhalb des Phosphorsäurespiegels münden kann, und im oberen Bereich von seinem unteren Teil mit einer Wasserstoffperoxidzuführungsleitung 3 versehen ist. Außerdem trägt dieser Behälter 8 an seinem Kopfende einen Brüdenabzug 5 und an seinem Boden einen Phosphorsäureablauf 4.

Vorzugsweise Ausgestaltungen dieser Vorrichtung sind:

a) daß in die Zuführung 1 for die Phosphorsäure ein Wärmetauscher 6 zum Erhitzen der Phosphorsäure eingebaut ist;

b) daß in den Brüdenabzug 5 ein Kondensator 7 eingebaut ist;

c) daß im oberen Teil des Behälters 8 eine Füllkörperpackung 9 angebracht ist;

d) daß zur Regulierung der Füllhöhe im unteren Teil des Behälters 8 der Phosphorsäureablauf 4 als Syphon ausgebildet ist;

e) daß zur Regulierung der Füllhöhe der Phosphorsäure im unteren Teil des Behälters 8 eine Füllstandsregelung 10 angebracht ist und

f) daß der Behälter 8 als Kolonne ausgebildet ist.

Eine bevorzugte erfindungsgemäße Arbeitsweise soll in Verbindung mit der nachfolgenden Zeichnung der Vorrichtung deutlich gemacht werden.

Über Leitung 1 und Wärmetauscher 6 fließt die heiße zu behandelnde Phosphorsäure in den Kopf der Kolonne 8 ein. Die obere Hälfte der Kolonne ist mit Einbauten, z. B. Füllkörpern aus Polytetrafluorethylen, bestückt. Unterhalb der Einbauten wird über Leitung 2 Dampf unter Druck eingeblasen, der im Gegenstrom die herabrieselnde Phosphorsäure zusammen mit den bei der $H_2O_2$-Zersetzung freiwerdenden Gasen benetzt. Die untere Kolonnenhälfte ist frei von Einbauten und mit einer Füllstandsregulierung versehen (z. B. Syphon oder automatisch gesteuertes Taktventil), so daß der Phosphorsäurespiegel etwa auf Höhe der Kolonnenmitte

2

behalten wird.

Unterhalb der Phosphorsäureoberfläche wird über Leitung 3 Wasserstoffperoxid, vorzugsweise in Form von Perhydrol, eingepumpt. Über Leitung 4 fließt die gereinigte Phosphorsäure ab, über Kondensator 7 und Leitung 5 werden die Brüden abgeführt.

Die gesamte Apparatur ist beispielsweise mit Polyvinylidenfluorid oder Polytetrafluorethylen ausgekleidet, druckfest ausgelegt und mit Druckhaltevorrichtungen versehen. Das Volumen des oberen mit Einbauten versehenen Kolonnenteils beträgt ca. 3 l, das des unteren von Phosphorsäure gefüllten Kolonnenteils beträgt ca. 4 l.

Als besondere Vorteile der erfindungsgemäßen Vorrichtung und Verfahrensweise können zusammenfassend genannt werden:

1. Keine Wärmeverluste der Säure zwischen Entfluorierungs- und Oxidationsstufe durch einstufige Fahrweise im angeschlossenen Behälter.

2. Gemeinsames Druckhaltesystem für Hochtemperatur-Entfluorierung und $C_{org.}$ Abreicherung.

3. Wegen der angewendeten hohen Temperaturen von > 120°C kein Katalysator zur Oxidation der Säure erforderlich, bei gleichzeitig geringem $H_2O_2$-Verbrauch und hoher Raum-Zeit-Ausbeute.

4. Voroxidation der herabrieselnden Säure durch bei der $H_2O_2$-Zersetzung freiwerdenden Sauerstoff (vgl. Beispiel 1 und 6).

5. Keine mechanisch bewegten Teile in der Apparatur erforderlich, wodurch keine Schwierigkeiten z. B. mit Rührwellenabdichtungen etc. auftreten können.

6. Alleinige Dampfstripping würde zwar den F-Wert abreichern, aber gleichzeitig entsteht eine Farbintensivierung der Säure (vgl. Beispiel 5).

7. Herstellung einer hochwertigen lebensmittelgerechten Phosphorsäure bezüglich aller geforderten Kriterien in einer einzigen Apparatur mit F-Werten < 10 ppm sowie < 10 ppm $C_{org.}$.

Aus den nachfolgenden Ausführungsbeispielen können die Vorteile des erfindungsgemäßen Verfahrens entnommen werden:

Über Rohrleitung 1 werden stündlich 4 l einer Phosphorsäure mit folgenden analytischen Daten eingegeben:

| | | | |
|---|---|---|---|
| $P_2O_5$ | 61,5 % | $SO_4$ | 0,02% |
| Schwermetalle | < 1 ppm | F | 125 ppm |
| Fe | 2 ppm | $C_{org.}$ | 88 ppm |
| Ca | < 5 ppm | opt. Durchlässigkeit (1 cm Küvette; 365 mm; gegen $H_2$): 68,9 % | |

## Beispiel 1

Die Säure wird im Wärmetauscher 6 auf 150°C erwärmt, im Gegenstrom wird über 2 Dampf mit 6 bar in einer Menge von 4 kg/h eingeblasen. Über Leitung 3 werden stündlich 30 ml Perhydrol (30 %-ig $H_2O_2$) eingespeist.

Bei 4 wird eine Säure mit 61,3 % $P_2O_5$ abgezogen, die 7 ppm F und 9 ppm $C_{org.}$ enthält. Die optische Durchlässigkeit beträgt 98,7 %; nach vierwöchigem Stehen an Tageslicht beträgt die Durchlässigkeit 98,2 %.

## Beispiel 2

Werden in Abänderung des Beispiels 1 6 kg/h Dampf und 60 ml/h Perhydrol eingebracht, hat die gereinigte Säure folgende analytischen Daten:

$P_2O_5$: 61,2 %      F: 4 ppm      $C_{org.}$: 5 ppm
opt. Durchlässigkeit: 99,5 % (nach 4 Wochen: 99,2 %)

## Beispiel 3 (Vergleichsbeispiel) entsprechend DE-A-3 131 847

Die gleiche Phosphorsäure wie in den o.g. Beispielen wird in einer Kaskade aus 4 Glasreaktoren von je 4 l Volumen bei 80°C mit $H_2O_2$ derart behandelt, daß stündlich 4 l Säure in den ersten Reaktor und 25 ml $H_2O_2$ (30 %-ig) in jeden Reaktor im Kreuzstrom eindosiert werden. Die Phosphorsäure wurde vorher mit 1 ppm V (in Form von $V_2O_5$) dotiert. Die Gesamtverweilzeit bei dieser Anordnung beträgt 4 h, die Gesamt-$H_2O_2$-Menge 100 ml/ h. Die abfließende Säure hat folgende analytischen Daten:

$P_2O_5$: 61,8 %   F: 115 ppm   $C_{org.}$: 18 ppm
opt. Durchlässigkeit: 92 %

**Beispiel 4** (Vergleichsbeispiel)

Die Säure wird entsprechend Beispiel 1 behandelt, mit dem Unterschied, daß sie nur auf 115°C vorgeheizt wird. Die abfließende Säure hat folgende analytischen Daten:

$P_2O_5$: 62,3 %   F: 28 ppm   $C_{org.}$: 35 ppm
opt. Durchlässigkeit: 90,5 %

**Beispiel 5** (Vergleichsbeispiel)

Die Säure wird analog Beispiel 1, jedoch ohne Zugabe von $H_2O_2$, behandelt. Die abfließende Säure hat folgende analytischen Daten:

$P_2O_5$: 61,4 %   F: 10 ppm   $C_{org.}$: 75 ppm
opt. Durchlässigkeit: 55,6 %

**Beispiel 6** (Vergleichsbeispiel)

Die im Beispiel 5 abfließende Säure wird in einem Durchfluß-Rührreaktor (ca. 4 l Volumen) bei 150°C mit 30 ml/h Perhydrol behandelt. Die abfließende Säure hat folgende analytischen Daten:

$P_2O_5$: 62,8 %   F: 8 ppm   $C_{org.}$: 20 ppm
opt. Durchlässigkeit: 93,5 %

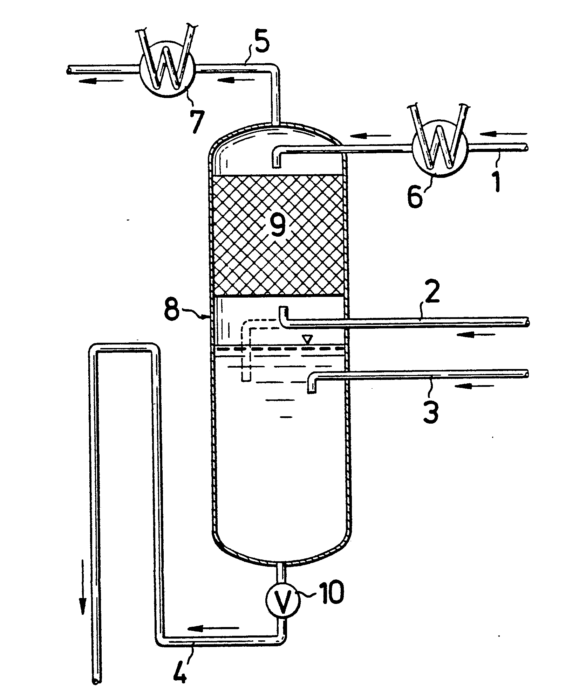

**Patentansprüche**

1. Verfahren zur Entfernung von aus Fluor und organischen Verbindungen bestehenden Verunreinigungen aus Naßverfahrensphosphorsäure, welche mit Hilfe von Extraktionsverfahren vorgereinigt worden ist, dadurch gekennzeichnet, daß man zur gleichzeitigen Entfernung der genannten Verunreinigungen in einer einzigen Verfahrensstufe die Phosphorsäure in den oberen Teil eines geschlossenen Behälters einleitet, dort im Gegenstrom mit Dampf bei Temperaturen von 120 - 180°C und Drucken größer als 1 bar behandelt, die so behandelte Säure im unteren Behälterteil auffängt, wo sie mit Wasserstoffperoxid umgesetzt wird und man über Kopf des Behälters fluorhaltige Brüden und aus dem unteren Behälterteil gereinigte Phosphorsäure abzieht.

2. Verfahren nach Anspruch 1, dadurch gekennzeichnet, daß man die verunreinigte Phosphorsäure vorerhitzt in den Behälter einleitet.

3. Verfahren nach Anspruch 1 oder 2, dadurch gekennzeichnet, daß man das Wasserstoffperoxid als wäßrige Lösung einsetzt und im unteren Behälterteil im Gleichstrom mit der Phosphorsäure führt.

4. Vorrichtung zur Durchführung des Verfahrens gemäß Anspruch 1, gekennzeichnet durch einen geschlossenen Behälter (8), der in seinem oberen Teil mit einer Zuführung (1) für verunreinigte Phosphorsäure und einer zu dieser Zuführung (1) räumlich tiefer angeordneten Dampfzuleitung (2), die sowohl über- als auch unterhalb des Phosphorsäurespiegel münden kann, und ferner im oberen Bereich von seinem unteren Teil mit einer Wasserstoffperoxidzuführungsleitung (3) versehen ist sowie an seinem Kopfende einen Brüdenabzug (5) und am Boden einen Phosphorsäureablauf (4) trägt.

5. Vorrichtung nach Anspruch 4, dadurch gekennzeichnet, daß in die Zuführung (1) für Phosphorsäure ein Wärmetauscher (6) zum Erhitzen der Phosphorsäure eingebaut ist.

6. Vorrichtung nach Anspruch 4 oder 5, dadurch gekennzeichnet, daß in den Brüdenabzug (5) ein Kondensator (7) eingebaut ist.

7. Vorrichtung nach einem der Ansprüche 4 bis 6, dadurch gekennzeichnet, daß im oberen Teil des Behälters (8) eine Füllkörperpackung (9) angebracht ist.

8. Vorrichtung nach einem der Ansprüche 4 bis 7, dadurch gekennzeichnet, daß zur Regulierung der Füllhöhe der Phosphorsäure im unteren Teil des Behälters (8) der Phosphorsäureablauf (4) als Syphon ausgebildet ist.

9. Vorrichtung nach einem der Ansprüche 4 bis 7, dadurch gekennzeichnet, daß zur Regulierung der Füllhöhe der Phosphorsäure im unteren Teil des Behälters (8) eine Füllstandsregelung (10) angebracht ist.

10. Vorrichtung nach einem der Ansprüche 4 bis 9, dadurch gekennzeichnet, daß der Behälter (8) als Kolonne ausgebildet ist.

## Claims

1. A process for removing contaminants comprising fluorine and organic compounds from wet-process phosphoric acid which has been pre-purified with the aid of extraction methods, wherein, for simultaneous removal of the contaminants mentioned in a single process step, the phosphoric acid is passed into the upper part of a sealed container and treated therein in countercurrent with steam at temperatures of 120-180° C and pressures greater than 1 bar, the acid thus treated is collected in the lower part of the container, where it reacts with hydrogen peroxide, and fluorine-containing vapors are removed via the head of the container and purified phosphoric acid from the lower part of the container.

2. The process as claimed in claim 1, wherein the contaminated phosphoric acid is heated before passing into the container.

3. The process as claimed in claim 1 or 2, wherein the hydrogen peroxide is employed as an aqueous solution and transported in the lower part of the container in parallel current with the phosphoric acid.

4. An apparatus for carrying out the process as claimed in claim 1, comprising a sealed container (8), which is provided in its upper part with an inlet (1) for contaminated phosphoric acid and a steam inlet (2), which is arranged spatially lower than this inlet (1) and which can join either above or below the phosphoric acid level, and furthermore in the upper region of its lower part with a hydrogen peroxide supply line (3), and carries a vapor outlet (5) at its head end and a phosphoric acid outlet (4) in the base.

5. The apparatus as claimed in claim 4, wherein a heat exchanger (6) for heating the phosphoric acid is built into the inlet (1) for phosphoric acid.

6. The apparatus as claimed in claim 4 or 5, wherein a condenser (7) is built into the vapor outlet (5)

7. The apparatus as claimed in any one of claims 4 to 6, wherein the upper part of the container (8) contains packing (9).

8. The apparatus as claimed in any one of claims 4 to 7, wherein the phosphoric acid outlet (4) is designed as a syphon in order to regulate the phosphoric acid level in the lower part of the container (8).

9. The apparatus as claimed in any one of claims 4 to 7, where in a level regulator (10) is attached for regulating the phosphoric acid level in the lower part of the container (8).

10. The apparatus as claimed in any one of claims 4 to 9, wherein the container (8) is designed as a column.

## Revendications

1. Procédé pour l'élimination d'impuretés consistant en fluor et impuretés organiques de l'acide phosphorique du procédé par voie humide, qui a été préalablement purifié par des procédés d'extraction, caractérisé en ce que, pour l'élimination simultanée des impuretés mentionnées en un seul stade opératoire, on introduit l'acide phosphorique dans la partie supérieure d'un récipient fermé, on l'y traite à contre-courant par la vapeur à des températures de 120-180°C sous des pressions de plus de 1 bar, on recueille l'acide traité dans la partie inférieure du récipient, où il est mis à réagir avec le peroxyde d'hydrogène et on évacue les vapeurs fluorées en tête du récipient et on soutire l'acide phosphorique purifié de la partie inférieure du récipient.

2. Procédé selon la revendication 1, caractérisé en ce que l'on introduit dans le récipient l'acide phosphorique contaminé préchauffé.

3. Procédé selon la revendication 1 ou 2, caractérisé en ce que l'on utilise le peroxyde d'hydrogène en solution aqueuse et on l'envoie dans la partie inférieure du récipient en équicourant avec l'acide phosphorique.

4. Appareil pour la mise en oeuvre du procédé selon la revendication 1, caractérisé par un récipient fermé (8), qui est muni dans sa partie supérieure d'une conduite d'amenée (1) pour l'acide phosphorique contaminé et une conduite d'amenée de vapeur (2) disposée plus bas que cette conduite d'amenée (1), et qui peut déboucher au-dessus ou également au-dessous du niveau de l'acide phosphorique, et en outre dans la région supérieure de sa partie inférieure d'une conduite d'amenée de peroxyde d'hydrogène (3), et qui porte à son extrémité de tête une conduite d'évacuation des vapeurs (5) et dans son fond une conduite de soutirage d'acide phosphorique (4).

5. Appareil selon la revendication 4, caractérisé en ce qu'un échangeur de chaleur (6) pour le chauffage de l'acide phosphorique est incorporé dans la conduite d'amenée (1) de l'acide phosphorique.

6. Appareil selon la revendication 4 ou 5, caractérisé en ce qu'un condenseur (7) est incorporé dans la conduite d'évacuation des vapeurs (5).

7. Appareil selon l'une des revendications 4 à 6, caractérisé en ce qu'un remplissage de corps de garnissage (9) est disposé dans la partie supérieure du récipient (8).

8. Appareil selon l'une des revendications 4 à 7, caractérisé en ce que la conduite de soutirage d'acide phosphorique (4) a la forme d'un siphon pour le réglage de la hauteur de remplissage de l'acide phosphorique dans la partie inférieure du récipient (8).

9. Appareil selon l'une des revendications 4 à 7, caractérisé en ce qu'un dispositif de réglage du niveau de remplissage (10) est prévu pour le réglage de la hauteur de remplissage de l'acide phosphorique dans la partie inférieure du récipient (8).

10. Appareil selon l'une quelconque des revendications 4 à 9, caractérisé en ce que le récipient (8) a la forme d'une colonne.